# NOUVEAU FASCICULE DE BREVET EUROPEEN

(11) **EP 0 263 047 B2**
(45) Date de publication et mention de la décision concernant l'opposition: **10.03.1993**
(45) Mention de la délivrance du brevet: 04.07.1990
(21) Numéro de dépôt: 87440060.9
(22) Date de dépôt: 29.09.1987
(51) Int. Cl.: B65G 47/71

(54) **Convoyeur sans pression de bouteilles ou analogues**
Förderer, für drucklosen Transport von Flaschen oder dergleichen Gegenständen
Conveyer for transport without pressure of bottles or analogous objects

(30) Priorité: 03.10.1986 FR 8613909
(43) Date de publication de la demande: 06.04.1988
(73) Titulaire: Société Anonyme dite: GEBO, F-67116 Reichstett (FR)
(72) Inventeur: Schoen, Robert, F-67400 Ostwald (FR); Ludwig, Marcel, F-67610 La Wantzenau (FR); Elchinger, Othon, F-67480 Roeschwoog (FR)
(74) Mandataire: Aubertin, François

(56) Documents cités:
- EP-A- 0 019 117
- DE-A- 2 627 277
- DE-A- 2 727 278
- FR-A- 2 252 271
- FR-A- 2 531 046
- US-A- 3 866 739

## Description

l'invention a trait à un convoyeur sans pression de bouteilles ou analogues, comprenant un transporteur d'entrée à chaînes à palettes à voie unique, un transporteur de ralentissement pourvu d'une rampe de guidage et un transporteur de sortie à voies multiples juxtaposées.

Ce convoyeur est destiné à transiter des bouteilles en cours de traitement provenant d'une machine par exemple de capsulage et se dirigeant vers une autre machine disposée en aval Ce convoyeur trouvera son utilité chaque fois qu'il sera nécessaire de constituer un stock-tampon en entrée d'une machine de traitement de bouteilles ou autres récipients.

On connaît déjà des convoyeurs permettant de constituer un stock-tampon de récipients provenant d'une machine de traitement et se déplaçant sur un transporteur d'entrée à chaînes à palettes à voie unique. En sortie de ce transporteur d'entrée, les bouteilles débouchent sur un transporteur de ralentissement servant au regroupement desdites bouteilles. Ce transporteur de ralentissement est constitué de plusieurs chaînes à palettes juxtaposées entraînées par des moyens moteurs à des vitesses échelonnées, une rampe de guidage surmontant ce transporteur de ralentissement permet de diriger les bouteilles d'une chaîne à l'autre. Les bouteilles dégagées selon un pas régulier par la machine de traitement en amont, sont alors amenées à venir en contact l'une derrière l'autre et à se diriger vers le transporteur de sortie à voies multiples. En débouchant sur ce dernier les bouteilles sont animées d'un mouvement rectiligne uniforme et viennent à se placer approximativement l'une derrière l'autre sur le transporteurde sortie. Fré- quemment, pour des questions d'encombrement, ce transporteur de sortie présente une longueur réduite et il est nécessaire, pour constituer un stock-tampon convenable de répartir les bouteilles sur toute la surface utile. Cette répartition des bouteilles, placées l'une derrière l'autre, sur toute la largeur de la surface utile du transporteur de sortie, ne peut se faire qu'en conférant une vitesse élevée aux différentes chaînes à palettes de ce dernier. En effet, les bouteilles venant à s'entrechoquer à grande vitesse, exercent une pression l'une sur l'autre et provoquent leur répartition suivant la largeur dudit transporteur de sortie.

Ce type de dispositif présente un certain nombre d'inconvénients. Plus la cadence de production sera élevée, plus il sera nécessaire de provoquer rapidement la répartition des bouteilles sur toute la surface utile du transporteur de sortie. En effet, une mauvaise répartition provoque rapidement une accumulation des bouteilles en sortie de machine de traitement en amont, à hauteur du transporteur d'entrée et donc l'arrêt des installations. Cette rapidité de répartition dépendra de l'effet de choc entre les différentes bouteilles. Pour conférer à cet effet de choc plus d'intensité, il est nécessaire d'augmenter la vitesse d'avance des chaînes à palettes du transporteur de sortie. Il en résulte plusieurs inconvénients majeurs, notamment un nombre important de bouteilles renversées, nécessitant l'intervention d'un opérateur à une fréquence soutenue, un bruit de fonctionnement considérable, des bouteilles cassées dues au choc et autres.

On connaît également, de par le document FR-A-2.531.046 un dispositif pour élargir et ralentir un flot de bouteilles debout ou analogues, correspondant au préambule de la revendication 1. Ce dispositif comporte un transporteur d'entrée à voie unique débouchant sur un transporteur intermédiaire incliné latéralement et provoquant le ralentissement et le regroupement des bouteilles. En sortie du transporteur intermédiaire les bouteilles s'engagent sur un transporteur de sortie à trois voies en y occupant toute la surface utile. Grâce à une meilleure répartition des bouteilles, obtenue sans pression, les chaînes à palettes du transporteur de sortie sont animées d'une vitesse d'avance plus faible. Encore faut-il que cette répartition se fasse dans de bonnes conditions.

Or, le plan incliné constitué essentiellement par le transporteur intermédiaire présente un certain nombre d'inconvénients. En effet, le déplacement des bouteilles, sors la simple action de la pesanteur, est tout à fait aléatoire, étant donné pou'il dépend du coefficient de frottement, donc de la rugosité variable des fonds de bouteilles et des inégalités de surface des chaînes à palettes. De plus, l'angle d'inclinaison du transporteur intermédiaire est fonction non seulement du type de récipient transporté, mais également de leur poids. De ce fait, cet angle d'inclinaison sera différent selon que les bouteilles déplacées sont vides ou pleines. Ainsi, pour déterminer l'inclinaison dudit plan, il est nécessaire de prendre en considération de nombreux facteurs.

Un autre inconvénient non négligeable de ce dispositif consiste en un risque accru des chutes de bouteilles sur le transporteur intermédiaire. Cet inconvénient est d'autant plus gênant qu'une bouteille, venant à se renverser sur le partie haute du transporteur intermédiaire, entraîne dans sa chute toutes les bouteilles situées en aval.

Il est également à remarquer, que la répartition des bouteilles dépend de la longueur du plan incliné et plus le transporteur de sortie comportera un nombre important de voies, plus il sera nécessaire d'augmenter les dimensions du transporteur intermédiaire.

Par ailleurs, on connaît, par le document EP-A-0.019.117, un dispositif de déviation de récipients tels que bouteilles ou autres, entre un transporteur d'entrée à voie unique et un transporteur de sortie à voies multiples. Plus précisément, le but de l'invention décrite dans ce document antérieur consiste à proposer une installation qui permet d'effectuer un triage parmi les récipients provenant du transporteur d'entrée en fonction des critères donnés, par exemple, le niveau de remplissage ou l'état physique. Acet effet, il est important de s'assurer que lesdits récipients arrivent sur le dispositif de déviation avec un pas régulier et à une vitesse relativement importante.

Ainsi, ce dispositif de déviation consiste en une rampe de guidage qui est en mesure de s'étendre, à un instant donné, au-dessus du transporteur de sortie. Ceci permet de conférer un récipient détecté par une cellule photoélectrique, une trajectoire à composante transversale par rapport au sens d'avance des chaînes à palettes pour finalement, l'écarter des autres récipients.

Ce dispositif de déviation peut être connu soit par une série de segments juxtaposés situés en sortie du transporteur d'entrée à voie unique,'que, soit par un segment unique de longueur plus importante et à caractère mobile ou encore un volet mobile rendu solidaire par me articulation de la rampe de guidage dudit transporteur d'entrée.

L'invention décrite dans ce document antérieur ne permet pas de résoudre les problèmes précités, à savoir réduire la vitesse d'avance du transporteur de sortie pour diminuer l'intensité de l'entrechoquement des bouteilles.

En effet, ces dernières débouchent du transporteur d'entrée avec un pas régulier et conservent leur écart respectif sur le transporteur de sortie. Il en résulte, soit un transporteur de sortie de longueur importante, soit une vitesse d'avance élevée des chai- nes à palettes pour constituer un stock-tampon convenable.

La présente invention a pour but de remédier à ces inconvénients. L'invention telle qu'elle est caractérisée dans les revendications, résout le problème et consiste en un convoyeur sans pression de bouteilles ou analogues, comprenant un transporteur d'entrée à chaînes à palettes à voie unique, un transporteur de ce ralentissement pourvu d'une rampe de guidage et un transporteur de sortie à voies multiples juxtaposées, se convoyeur comportant, en outre, des moyens de répartition, constitués par un tronçon terminai de la rampe de guidage, de forme recourbée. soumis à un certain battement faisant varier son rayon de courbure et en substance disposé sur la surface de ralentissement pour transformer la trajectoire rectiligne des bouteilles, en provenance du transporteur d'entrée et exerçant une poussée les unes sur les autres en une trajectoire à composante transversale et pour répartir lesdites bouteilles, sous forme d'un parcours serpentin, sur toute la surface utile du transporteur de sortie.

Les avantages obtenus grâce à cette invention consistent essentiellement en se que le convoyeur sans pression comporte un transporteur de ralentissement formé d'une pluralité de chaînes à palettes à vitesse d'avance échelonnée et permettant de faire en sorte que les bouteilles, provenant du transporteur d'entrée avec un pas régulier, viennent à se rejoindre le long de la rampe de guidage. Il en résulte une poussée des bouteilles les unes sur les autres assurant à certaines d'entre elles des trajectoires à composante transversale importantes grâce à des moyens de répartition ne s'étendant que faiblement au-dessus du transporteur de sortie. Cette caractéristique permet, en outre, de conférer à se dernier une vitesse d'avance particulièrement réduite. Il est bien évident que ceci n'est possible qu'en raison d'une meilleure répartition des bouteilles sur toute la surface utile dudit transporteur de sortie, évitant le stockage sans pression. Il s'en suit une nette diminution du bruit de fonctionnement et de la fatigue du matériau constituant les récipients. Cette répartition, dépourvue de l'ensemble des inconvénients notamment de ceux des dispositifs décrits dans les documents antérieurs cités ci-dessus, permet au convoyeur de conserver une longueur réduite tout en augmentant le nombre de voies du transporteur de sortie. De plus, ce convoyeur peut être utilisé pour des récipients quelconques et n'est plus tributaire des caractéristiques, telles que poids, forme ou rugosité, qui peuvent être différentes. Un autre avantage de la présente invention est de réduire considérablement le nombre d'interventions d'un opérateur dues à des chutes de bouteilles.

L'invention est exposée ci-après, plus en détail à l'aide de dessins représentant seulement un mode d'exécution.
La figure 1 représente, en plan, un convoyeur de récipients conforme à l'invention.
La figure 2 représente de manière agrandie la partie notée "A" de la figure 1.

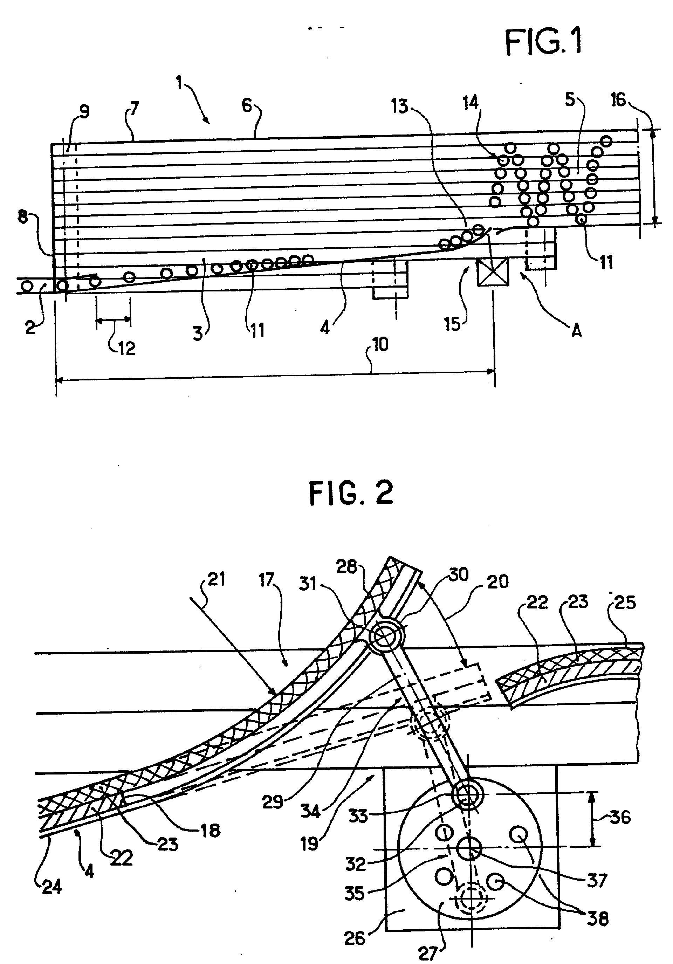

On se réfère aux figures 1 et 2.

On dispose entre deux machines d'me installation de conditionnement d'un liquide dans des récipients tels que bouteilles, un convoyeur 1, assurant l'avance des bouteilles sans pression, composé d'un transporteur d'entrée 2 à chaînes à palettes à voie unique, d'un transporteur de ralentissement 3 pourvu d'un côté d'une rampe de guidage 4 et d'un transporteur de sortie 5 à voies multiples juxtaposées pourvu d'une seconde rampe de guidage 6 parallèle au bord longitudinal 7 dudit transporteur de sortie 5.

Le transporteur d'entrée 2 provenant d'une machine de traitement des bouteilles (non représentée), telle que embouteilleuse ou autres, débouche à l'extrémité amont 8 du transporteur de ralentissement 3, ce dernier ayant la fonction de transiter les bouteilles du transporteur d'entrée 2 au transporteur de sortie 5. Dans la figure 1, représentant un mode de réalisation de la présente invention, ce dernier n'est pas situé en sortie du transporteur de ralentissement 3 mais s'étend jusqu'à l'extrémité amont 8 de ce dernier. Ainsi, l'ensemble des chaînes à palettes, constituant le transporteur de ralentissement 3 et le transporteur de sortie 5, s'enroule, partiellement, à cette extrémité amont 8 du transporteur de ralentissement 3, autour d'un même tambour de renvoi 9, la longueur 10 de cet ensemble étant quelconque.

Le transporteur d'entrée 2 alimente en bouteilles 11 le transporteurde ralentissement 3 avec un pas régulier 12, dont la longueur dépend de la cadence de sortie des bouteilles de la mashine en amont. Dans le but de rattraper le pas 12 entre les bouteilles 11, le transporteur de ralentissement 3 est constitué d'une pluralité de chaînes à palette à vitesse d'avance échelonnée, de sorte que les bouteilles, provenant du transporteur d'entrée 2 et se déplaçant à vitesse élevée, viennent rejoindre les bouteilles progressant vers l'extrémité de sortie 13 du transporteur de ralentissement 3 et soumises à une vitesse réduite. La rampe de guidage 4, placée sur le transporteur de ralentissement 3, permet de diriger les bouteilles 11 d'une chaîne à palette à une autre dont la vitesse d'avance est plus lente.

Il est à remarquer que chacune des bouteilles 11 exerce une poussée l'une sur l'autre au niveau de l'extrémité de sortie 13 du transporteur de ralentissement 3, de manière à provoquer leur éjection sur le transporteur de sortie 5.

Selon une caractéristique de la présente invention, les bouteilles 11 au niveau du transporteur de sortie 5, comportent un parcours serpentin 14 provoqué par la transformation, par des moyens de répartition 15, d'un mouvement d'avance rectiligne uniforme des bouteilles 11, en provenance du transporteur d'entrée 2, en un mouvement alternatif combiné à l'avance des différentes chaînes du transporteur de sortie 5.

Selon un mode d'exécution préférentiel de la présente invention, le convoyeur 1 comporte une rampe de guidage pourvue des moyens de répartition 15 des bouteilles 11 sur toute la largeur utile 16 du transporteur de sortie 5. En réalisant une répartition des bouteilles 11 sur toute la largeur utile 16 du transporteur de sortie 5 les chaînes à palettes de ce dernier peuvent présenter une vitesse d'avance réduite contrairement à la répartition des bouteilles 11 connue selon l'état de la technique antérieure. Cette réduction de vitesse permet d'obtenir une nette diminution du bruit de fonctionnement et de la fatigue du verre lors du regroupement des bouteilles 11.

Selon un autre mode de réalisation de la présente invention, la rampe de guidage, pourvue des moyens de répartition 15 sans pression, correspond à la rampe de guidage 4 du transporteur de ralentissement 3. Les moyens de répartition 15 sans pression sont un tronçon recourbé 17 situé à l'extrémité 18 de la rampe de guidage 4 et des moyens moteurs 19 conférant à ce tronçon recourbé 17 un certain battement 20 (voir figure 2).

La trajectoire d'éjection des bouteilles 11 du transporteur de ralentissement 3 sur le transporteur de sortie 5 dépend du rayon de courbure 21 du tronçon recourbé 17, au moment même où cette éjection se produit. Ainsi, la modification de la trajectoire d'éjection de chaque bouteille 11, en sortie du transporteur de ralentissement 3, est obtenue grâce à la variation du rayon de courbure 21 du tronçon recourbé 17 de la rampe de guidage 4, cette variation du rayon de courbure 21 étant obtenue grâce aux moyens moteurs 19. Plus le rayon de courbure 21 du tronçon recourbé 17 sera important, plus l'angle, entre la trajectoire d'éjection des bouteilles 11 en sortie du transporteur de ralentissement 3 et la direction de déplacement des chaînes à palette du transporteur de sortie 5, sera faible. Au contraire, plus le rayon de courbure 21 sera petit, plus cet angle sera important et les bouteilles 11 tenteront à se rapprocher de la rampe de guidage 6 parallèle au bord longitudinal 7 du transporteur de sortie 5. Cette transformation du mouvement d'avance rectiligne des bouteilles 11 sur le transporteur de ralentissement 3 en un mouvement alternatif combiné à l'avance des différentes chaînes à palettes du transporteur de sortie 5 confère à la position de ces bouteilles 11 sur ce transporteur de sortie 5, une forme serpentine 14 somme visible dans la figure 1.

Selon un mode de réalisation préférentiel de la présente invention, le tronçon recourbé 17 est en un matériau souple situé dans le prolongement de la rampe de guidage 4. Généralement, les rampes de guidage 4 et 6 sont constituées d'une armature métallique 22, recouverte d'une gaine de protection 23 en un matériau plastique souple. Le tronçon recourbé 17 consiste en un prolongement de cette dernière. Cette disposition permet d'éviter toute irrégularité de surface au niveau du raccordement, sur l'extrémité 18 de la rampe de guidage 4, du tronçon recourbé 17. Selon un mode de réalisation particulier, la rampe de guidage 4 se compose d'une partie oblique 24 et d'une partie rectiligne 25, cette dernière étant parallèle à la rampe de guidage 6 du transporteur de sortie 5. Le tronçon recourbé 17 est obtenu en sectionnant cette rampe de guidage 4 à l'extrémité de sortie 13 du transporteur de ralentissement 3 et en raccourcissant l'armature métallique 22 de la partie oblique 24 de la rampe de guidage 4 d'une longueur équivalente au tronçon recourbé 17. Il est évident que tout autre mode d'obtention de ces derniers est envisageable sans pour cela sortir du cadre et de l'esprit de la présente invention.

Selon une autre caractéristique de la présente invention, les moyens moteurs 19, conférant au tronçon recourbé 17 un certain battement 20, comportent un élément moteur 26 entraînant en rotation un disque 27 relié à l'extrémité 28 du tronçon recourbé 17 par une bielle 29. La liaison entre le tronçon recourbé 17 et l'extrémité 10 de la bielle 29 est assurée au moyen d'une articulation 31, une autre articulation mobile 32 permet de relier l'extrémité 33 de la bielle 29 au disque 27. Ainsi, en entraînant en rotation ce dernier, au moyen de l'élément moteur 26, l'extrémité 30 de la bielle 29 se déplace dans un mouvement sensiblement de va-et-vient et confère à l'extrémité 28 du tronçon recourbé 17 un battement 20. La figure 2 représente les moyens de répartition 15 dans deux positions 34 et 35 correspondant à des positions extrêmes de la bielle 29. Lorsque la bielle 29 est dans la position 34, le rayon de courbure 21 du tronçon recourbé 17 atteint sa valeur minima, la valeur maxima de ce rayon de courbure 21 étant obtenue lorsque la bielle 29 est dans la position 35.

L'ampleur du mouvement de va-et-vient de l'extrémité 30 de la bielle 29 dépendra de la longueur 36 de la distance séparant l'axe de l'articulation mobile 32 et l'axe de rotation 37 du disque 27, ce dernier jouant le rôle d'une manivelle.

Il est nécessaire, pour pouvoir adapter ces moyens de répartition 15 à des convoyeurs 1 de caractéristiques variables, telles que largeur ou vitesse d'avance des chaînes à palettes, et aux différents types de récipients, d'avoir la possibilité de modifier l'ampleur et la vitesse d'exécution du mouvement de va-et-vient de l'extrémité 30 de la bielle 29, donc du battement 20 du tronçon recourbé 17. Dans ce but, selon une caractéristique de la présente invention le disque 27 comporte des logements 38 situés sur des cercles concentriques à l'axe de rotation 37. Ainsi, ces logements 38 permettent de varier la longueur 36 de la manivelle et, par conséquent, l'ampleur du battement 20 du tronçon recourbé 17.

L'autre part, les convoyeurs 1 fonctionnent à certains moments en phase transitoire, notamment à la mise en route ou à l'arrêt de l'installation. Dans ce cas, les moyens de répartition 15 doivent fonctionner en concordance avec la vitesse d'avance variable des chaînes à palettes des différents transporteurs. A cet effet, l'élément moteur 26, selon une autre caractéristique de la présente invention, est un moteur vitesse variable pourvu de moyens d'asservissement permettant d'adapter sa vitesse de rotation, et par conséquent, la fréquence du battement 20, à la vitesse variable d'avance des chaînes à palettes dru convoyeur 1.

Selon un autre mode de réalisation, les moyens moteurs 19, conférant au tronçon recourbé 17 un certain battement 20, sont constitués par un vérin hydraulique ou pneumatique relié à l'extrémité 28 du tronçon recourbé 17. Ce vérin hydraulique or pneumatique peut également comporter des moyens d'asservissement pour adapter la fréquence du battement 20 à la vitesse d'avance des chaînes à palettes du convoyeur 1.

L'ensemble des caractéristiques de la présente invention permet d'obtenir un convoyeur de grande fiabilité, dont le bruit de fonctionnement est considérablement diminué. De plus, grâce à une répartition obtenue mécaniquement et non sous l'effet de pesanteur, le convoyeur 1 présente une longueur réduite et peut trouver son itilisation dans tout type d'installation nécessitant un convoyage de bouteilles ou analogues et la constitution d'un stock-tampon entre deux machines.

## Revendications

1. Convoyeur sans pression (1) de bouteilles (11) ou analogues comprenant un transporteur d'entrée (2) à chaînes à palettes à voie unique, un transporteur de ralentissement (3) pourvu d'une rampe de guidage (4) et un transporteur de sortie (5) à voies multiples juxtaposés, caractérisé par le fait qu'il comporte des moyens de répartition (15), constitués par un tronçon (17) terminal de la rampe de guidage (4), de forme recourbée soumis à un certain battement faisant varier son rayon de courbure et en substance disposé sur la surface de ralentissement (3), pour transformer la trajectoire rectiligne des bouteilles (11), en provenance du transporteur d'entrée (2) et exerçant une poussée les unes sur les autres, en une trajectoire à composante transversale et pour répartir lesdites bouteilles (11) sous forme d'un parcours serpentin (14), sur toute la surface utile (16) du transporteur de sortie (5).

2. Convoyeur selon la revendication 1, caractérisé par le fait que le tronçon recourbé (17), constituant les moyens de répartition (15) solidaires de la rampe de guidage (4), est soumis à un certain battement par des moyens moteurs (19).

3. Convoyeur selon la revendication 1, caractérisé par le fait que le tronçon recourbé (17), de la rampe de guidage (4) consiste en un prolongement d'une gaine de protection (23) en matériau souple de ladite rampe de guidage (4).

4. Convoyeur selon la revendication 2, caractérisé par le fait que les moyens moteurs ( 19) conférant au tronçon recourbé ( 17) un battement (20) régulier, comportent un moteur à vitesse variable entraînant en rotation un disque (27) présentant des logements (38) situés sur des cercles concentriques à l'axe de rotation (37) dudit disque (27) et dans lesquels peut être introduite l'articulation (32) d'une bielle (29) reliée à l'extrémité (28) du tronçon recourbé (17), pour faire varier la fréquence et l'amplitude du battement (20) de ce dernier.

5. Convoyeur selon la revendication 4, caractérisé par le fait que le moteur à vitesse variable comporte des moyens d'asservissement pour adapter la fréquence du battement (20) du tronçon recourbé (17) à la vitesse d'avance des chaînes à palettes du convoyeur (1).

## Claims

1. Conveyer (1) for transport without pressure of bottles (11) or analogous objects, comprising a single-track pallet chain feed-in conveyer (2), a slowing-down conveyer (3) provided with a guiding ramp (4) and a feed-out conveyer with juxtap- posed multiple tracks, characterized in that it includes distributing means (15) formed by a bend- shaped end length (17) of the guiding ramp (4) subject to some beating causing its radius of curvature to vary and substantially arranged on the slowing-down surface (3) in order to convert the rectilinear pathway of the bottles (11) proceeding from the feed-in conveyer (2) and exerting a pressure onto each other into a pathway with a transversal component and to distribute said bottles (11) in the form of a serpentine pathway (14) over the full useful area (16) of the feed-out conveyer (5).

2. Conveyer according to claim 1, characterized in that the bent length (17) forming the distributing means (15) integral with the guiding ramp (4) is subjected to some beating through driving means (19).

3. Conveyer according to claim 1, characterized in that the bent length (17) of the guiding ramp (4) consists of an extension of a protecting sheath (23), made of a flexible material, of said guiding ramp (4).

4. Conveyer according to claim 2, characterized in that the driving means (19) conferring a regular beating (20) to the bent length (17) comprise a variable-speed motor driving in rotation a disc (27) having recesses (38) located on circles concentrical to the axis of rotation (37) of said disc (27) and into which can be engaged the hinged joint (32) of a connecting rod (29) connected to the end (28) of the bent length (17) in order to cause the frequency and the amplitude of the beating (20) of this latter to vary.

5. Conveyer according to claim 4, characterized in that the variable-speed motor includes servo- control means for adapting the frequency of the beating (20) of the bent legth (17) to the feed rate of the pallet chains of the conveyer (1).

## Patentansprüche

1. Förderer (1) für drucklosen Transport von Flaschen (11) oder dergleichen Gegenständen, umfassend einen Einzelbahnpalettenkettenzuförderer (2), einen mit einer Führungsrampe (4) versehenen Hemmförderer (3) und einen Abforderer (5) mit mehreren nebeneinanderliegenden Bahnen, dadurch gekennzeichnet, daß er Verteilungsmittel (15) umfaßt, die aus einem bogenförmigen Endabschnitt (17) der Führungsrampe (4) gebildet sind, der einem gewissen Schwingen ausgesetzt ist, um dessen Krümmungsradius ändern zu lassen, und im wesentlichen auf der Hemmungsfläche (3) angeordnet ist, um den geradlinigen Weg der vom Zuförderer (2) kommenden und einen Druck auf einander ausübenden Flaschen (11) in einen Weg mit einer Querkomponente umzuwandeln und die genannten Flaschen (11) in der Form einer schlangenförmigen Bahn (14) über die ganze nützliche Fläche (16) des Abförderers (5) zu verteilen.

2. Förderer nach Anspruch 1, dadurch gekennzeichnet, daß der gebogene Abschnitt (17), der die fest mit der Führungsrampe (4) verbundenen Verteilungsmittel (15) bildet, über Antriebmittel (19) einem gewissen Schwingen ausgesetzt ist.

3. Förderer nach Anspruch 1, dadurch gekennzeichnet, daß der gebogene Abschnitt (17) der Führungsrampe (4) aus einer Verlängerung der Schutzhülle (23) aus weichem Material der genannten Führungsrampe (4) besteht.

4. Förderer nach Anspruch 2, dadurch gekennzeichnet, daß die Antriebmittel (19), die dem gebogenen Abschnitt (17) ein regelmäßiges Schwingen (20) verleihen, einen Motor mit Drehzahlregelung umfassen, der eine Scheibe (27) in Drehung antreibt, die Ausnehmungen (38) aufweist, die sich auf zur Drehachse (37) der genannten Scheibe (27) konzentrischen Zirkeln befinden und in die das Gelenk (32) einer mit dem Ende (28) des gebogenen Abschnitts (17) verbundenen Pleuelstange (29) hineingeführt werden kann, um die Frequenz und die Weite des Schwingens (20) dieses letzten zu ändern.

5. Förderer nach Anspruch 4, dadurch gekennzeichnet, daß der Motor mit Drehzahlregelung Servomittel umfaßt, um die Frequenz des Schwingens (20) des gebogenen Abschnitts (17) der Vorschubgeschwindigkeit der Palettenketten des Förderers (1) anzupassen.
